# EUROPEAN PATENT SPECIFICATION

(11) **EP 2 801 234 B1**
(45) Date of publication and mention of the grant of the patent: **01.05.2019**
(21) Application number: 12829213.3
(22) Date of filing: 20.12.2012
(51) Int. Cl.: H04W 76/16

(54) **METHOD FOR ACCESSING IN WIRELESS COMMUNICATION NETWORK**
VERFAHREN FÜR DEN ZUGANG IN EINEM DRAHTLOSEN KOMMUNIKATIONSNETZ
PROCÉDÉ POUR ACCÉDER À UN RÉSEAU DE COMMUNICATION SANS FIL

(30) Priority: 05.01.2012 CN 201210002253
(43) Date of publication of application: 12.11.2014
(73) Proprietor: Alcatel Lucent, 91620 Nozay (FR)
(72) Inventor: WANG, Yonggang, 201206 Shanghai (CN)
(74) Representative: Nokia EPO representatives
(86) International application number: PCT/IB2012/002869
(87) International publication number: WO 2013/102789

(56) References cited:
- EP-A1- 2 291 048
- EP-A1- 2 378 833
- EP-A2- 1 788 776
- WO-A2-2011/142635
- US-A1- 2011 305 220
- "3rd Generation Partnership Project; Technical Specification Group Services and System Aspects; Circuit Switched (CS) fallback in Evolved Packet System (EPS); Stage 2 (Release 10)", 3GPP STANDARD; 3GPP TS 23.272, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 10 June 2010 (2010-06-10), pages 1-73, XP050441566, [retrieved on 2010-06-10]

## Description

### Field of the invention

The present disclosure relates to a wireless communication network and particularly to a method of accessing in a wireless communication network.

### Background of the invention

In access networks of a wireless communication network, there are access sub-networks adopting different wireless communication access technologies, e.g., a Global System for Mobile communication (GSM) access network, a Universal Mobile Telecommunications System (UMTS) access network, a Time Division Duplex (TDD) - Synchronous Code Division Multiple Access (TD-SCDMA) access network, a Long Term Evolution (LTE) access network, a Worldwide Interoperability for Microwave Access (WiMax) access network, etc.. These access sub-networks are respectively provided with a link to a core network and are respectively capable of establishing a link to a user equipment to establish an access of the user equipment to the access networks.

However in the prior art, the independence of these access sub-networks results in that the data rate of the user equipment is limited to the data rate of the access sub-network to which the user equipment has an access. Besides, a handover of the user equipment between the respective access sub-networks may result in a handover relay, and even a service required for the user equipment may be interrupted when the user needs various types of services.

For example due to a limited rate of the GSM network, when the user equipment has established a link with the GSM access network to transmit voice data, if the user equipment further requests a new LTE data service, then the user equipment has to disconnect the link with the GSM network and then establish a link with the LTE access network, thus the voice service is interrupted. Or when the user equipment has established a link with the LTE access network to transmit LTE data service, if the user equipment requests a voice communication service, then the user equipment has to disconnect the link with the LTE access network and further establish a link with the GSM access network, thus the data service is interrupted.

A document EP 2 291 048 A1 proposes a method and a system of network controllers in order to transmit data packets in multi-RAT networks, wherein a connection is established for user plane transmission on the same PDP context between a primary network controller of a primary RAT and a secondary network controller of a secondary RAT.

A document EP 2 378 833 A1 relates to a method for establishing a circuit switched call between a first electronic device and a second electronic device over a circuit switched communication system.

### Summary of the invention

It has been proposed in a communication standard to build a Base Band Unit (BBU) pool using BBUs of access sub-networks adopting various wireless access technologies as a whole. However a method of increasing the data rate of a user equipment using the communication between BBUs has not yet been proposed.
the present invention is disclosed by the independent claim 1. Additional advantageous embodiments are disclosed by the appended dependent claims. Further embodiments, aspects and examples not falling within the scope of the claims are only for descriptive purpose.

In light of the foregoing understanding of the prior art and the technical problem thereof, it will be very beneficial if a method of accessing can be provided to increase the data rate of a user equipment, to alleviate or avoid a handover delay and to enable a user to access various services at the same time without interrupting any service.

According to a first aspect of the invention, there is provided a method of accessing, in a first access sub-network of a wireless communication network, the method comprising the steps of: a. establishing an initial link with a user equipment; b. receiving first service downlink data from a core network or first service uplink data from the user equipment; c. transmitting the first service downlink data to the user equipment or transmitting the first service uplink data to the core network; d. receiving a second service request from the user equipment; e. forwarding the second service request to the core network; f. receiving second service downlink data from the core network or second service uplink data from a second access sub-network; and g. transmitting the second service downlink data to the second access sub-network or transmitting the second service uplink data to the core network, wherein, the first access sub-network and the second access sub-network adopt different wireless communication access technologies.

According to a second aspect of the invention, there is provided a method of accessing, in a second access sub-network of a wireless communication network, the method comprising the steps of: A. receiving a first notification message from a first access sub-network or a core network for instructing the second access sub-network to establish a link with a user equipment, or receiving a link establishing request from the user equipment; B. establishing a link with the user equipment; C. receiving second service downlink data from the first access sub-network or second service uplink data from the user equipment; and D. transmitting the second service downlink data to the user equipment or transmitting the second service uplink data to the first access sub-network; wherein, the first access sub-network and the second access sub-network adopt different wireless communication access technologies.

According to a third aspect of the invention, there is provided a method assisting in accessing, in a core network of a wireless communication network, the method comprising the steps of: i. receiving a second service request from a first access sub-network, which is originated from a user equipment and forwarded by the first access sub-network; ii. determining whether the second service request needs to be processed by the second access sub-network according to a predetermined parameter; iii. if the second service request needs to be processed by the second access sub-network, transmitting a first notification message to the second access sub-network to instruct the second access sub-network to establish a link with the user equipment; and iv. receiving second service uplink data from the first access sub-network or transmitting second service downlink data to the first access sub-network, wherein, the first access sub-network and the second access sub-network adopt different wireless communication access technologies.

According to a fourth aspect of the invention, there is provided a method of assisting in accessing, in a user equipment of a wireless communication network, the method comprising the steps of: I. establishing an initial link with a first access sub-network; II. receiving first service downlink data from the first access sub-network or transmitting first service uplink data to the first access sub-network; III. transmitting a second service request to the first access sub-network; IV. establishing a link with a second access sub-network; and VI. receiving second service downlink data from the second access sub-network or transmitting second service uplink data to the second access sub-network, wherein, the first access sub-network and the second access sub-network adopt different wireless communication access technologies.

According to a fifth aspect of the invention, there is provided a method of accessing in an access network of a wireless communication network, wherein, the access network at least comprises a first access sub-network and a second access sub-network between which communication can be performed, and wherein the first access sub-network and the second access sub-network adopt different wireless communication access technologies.

With the solution of the invention, there is proposed a solution for a multi-standard wireless communication access network. A user equipment can enjoy different types of services concurrently without being handed over between access sub-networks adopting different wireless access technologies. Specifically, the user equipment can obtain data of a second service without interrupting an initial link with a first access sub-network. With the solution of the invention, a gap between the different wireless access technologies is removed, and the data transmission rate of the access network can be increased to the sum of data transmission rates under different wireless access technologies. Thus the data rate of the user equipment will not be limited to the network data rate of the access sub-network to which the user equipment is linked.

Furthermore, with the solution of the invention, a simpler network architecture can be implemented. At the user side and the core network side, the access sub-networks adopting the various wireless access technologies can be regarded as a whole without distinguishing the different access sub-networks. For the operator, different wireless access technologies constitute a shared pool of resources, so that both the investment of operating assets and the investment of fixed assets can be reduced.

### Brief description of drawings

Other features, objects and advantages of the invention will become more apparent from the following detailed description of non-limiting embodiments taken in conjunction with the drawings in which:
Fig.1 illustrates a schematic structural diagram of a topology of a communication network according to an embodiment of the invention; and
Fig.2 illustrates a flow chart of a method according to an embodiment of the invention.

Throughout the different figures in the drawings, identical or like reference numerals will denote identical or like devices (modules) or steps.

### Detailed description of embodiments

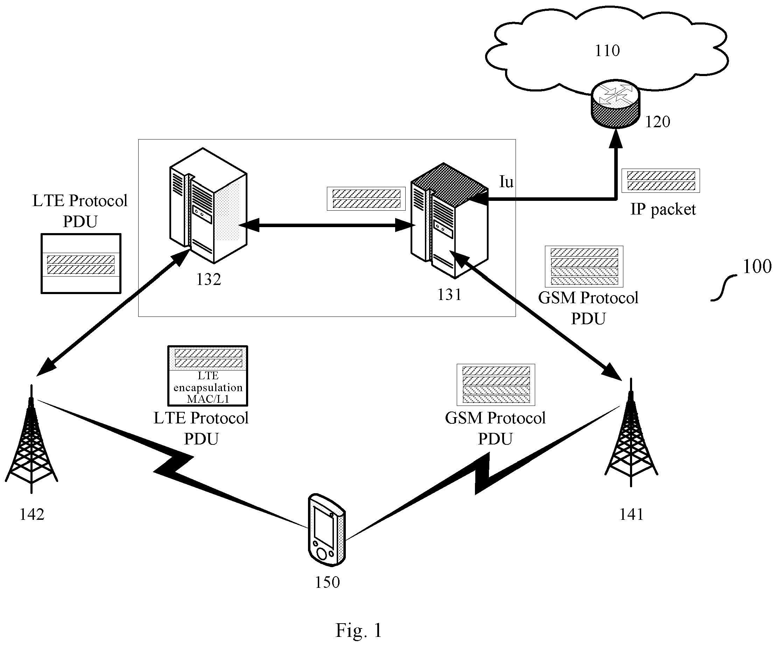

Fig.1 illustrates a schematic structural diagram of a topology of a communication network according to an embodiment of the invention. The communication network 100 comprises a core network 110, a gateway 120, a first access sub-network, a second access sub-network, and a user equipment 150. The first access sub-network and the second access sub-network may comprise a plurality of base band units respectively. For the sake of simplicity, only a base band unit 131 of the first access sub-network and a base band unit 132 of the second access sub-network are illustrated here. Furthermore the first access sub-network and the second access sub-network may comprise a plurality of Remote Radio Heads (RRHs) respectively. For the sake of simplicity, only a remote radio head 141 of the first access sub-network and a remote radio head 142 of the second access sub-network are illustrated here. The core network 110 is connected to the first access sub-network and the second access sub-network through the gateway 140. When the user equipment 150 resides in an overlapping coverage area of the first access sub-network and the second access sub-network, the user equipment 150 may establish a link with the first access sub-network via the remote radio head 141 in the first access sub-network through the base band unit 131 of the first access sub-network, and the user equipment 150 may further establish a link with the second access sub-network via the remote radio head 142 in the second access sub-network through the base band unit 132 of the second access sub-network.

As can be appreciated, an implementation of the invention will not be limited to the type of the access sub-network. The first access sub-network and the second access sub-network may adopt any of GSM, UMTS, LTE, WiMax, TD-SCDMA and other known wireless access technologies or any other wireless access technology to be possibly developed in the future. For illustrating embodiments of the invention by way of an example, hereinafter the first access sub-network adopts the GSM access technology, and the second access sub-network adopts the LTE access technology. The first service is a voice communication service, and The second service is a LTE data service.

The base band unit 131 in the first access sub-network can receive data from the user equipment 150 through the remote radio head 141 and can transmit data to the user equipment 150 through the remote radio head 141, wherein, the data is a GSM Protocol Data Unit (PDU) encapsulated according to the GSM access technology. The base band unit 132 in the second access sub-network can receive data from the user equipment 150 through the remote radio head 142 and can transmit data to the user equipment 150 through the remote radio head 142, wherein, the data is a LTE Protocol Data Unit encapsulated according to the LTE access technology.

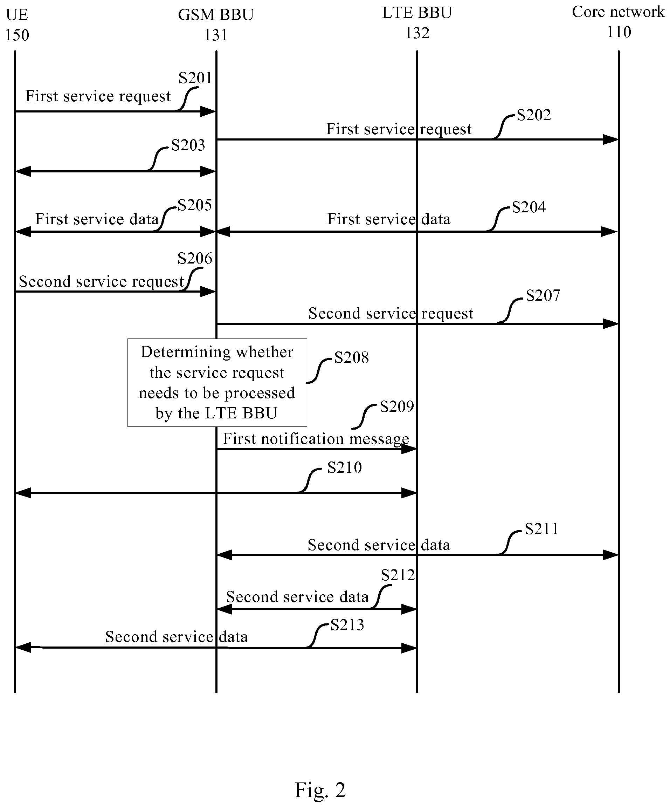

A flow of a method according to an embodiment of the invention will be described below with reference to Fig.2. In the step S201, the user equipment 150 transmits a first service request to the GSM base band unit 131 to request a voice communication service. In the step S202, the GSM base band unit 131 transmits the received first service request to the core network 110. In the step S230, the GSM base band unit 131 establishes an initial link with the user equipment 150.

Those skilled in the art can appreciate that if the user equipment 150 is a callee of voice communication, then before the GSM base band unit 131 establishes an initial link with the user equipment 150, it is possible for the core network 110 to transmit a called access request to the GSM base band unit 131 to instruct the GSM base band unit 131 to establish an initial link with the user equipment 150.

After the GSM base band unit 131 establishes an initial link with the user equipment 150, it is possible for the GSM base band unit 131 to receive downlink data of the voice communication service from the core network 110 in the step S204 and subsequently transmit the downlink data of the voice communication service to the user equipment 150 in the step S205. It is also possible for the GSM base band unit 131 to receive uplink data of the voice communication service from the user equipment 150 in the step S205 and subsequently transmit the uplink data of the voice communication service to the core network 110 in the step S204.

In the step S206, the user equipment 150 transmits a second service request to the GSM base band unit 131 to request a LTE data service. In the step S207, the GSM base band unit 131 transmits the received second service request to the core network 110.

In the step S208, the GSM base band unit 131 determines whether the second service request needs to be processed by the LTE base band unit 132 according to a predetermined parameter, wherein, the predetermined parameter comprises: quality of service requested by the second service request, a capability of accessing the second access sub-network of the user equipment, network capabilities of the first access sub-network and the second access sub-network and a current network load.

If the second service request needs to be processed by the second access sub-network, then the GSM base band unit 131 transmits a first notification message to the LTE base band unit 132 in the step S209 to instruct the LTE base band unit 132 to establish a link with the user equipment 150. Those skilled in the art shall appreciate that in addition to instructing the LTE base band unit 132 to establish a link with the user equipment 150, it is also possible that if the second service request needs to be processed by the LTE base band unit 132, then the GSM base band unit 131 transmits a second notification message to the user equipment 150 to instruct the user equipment to establish a link with the LTE base band unit 132. The user equipment transmits a link establishing request to the LTE base band unit 132 upon reception of the second notification message. In the step S210, the LTE base band unit 132 establishes a link with the user equipment 150.

Those skilled in the art can appreciate that alternatively the core network 110 may determine whether the second service request needs to be processed by the LTE base band unit 132. For example, the core network 110 determines whether the second service request needs to be processed by the LTE base band unit 132 according to a predetermined parameter upon reception of the second service request, wherein, the predetermined parameter comprises: quality of service requested by the second service request, a capability of accessing the second access sub-network of the user equipment, network capabilities of the first access sub-network and the second access sub-network and a current network load. If the second service request needs to be processed by the LTE base band unit 132, then the GSM base band unit 131 transmits a first notification message to the LTE base band unit 132, to instruct the LTE base band unit 132 to establish a link with the user equipment 150.

After the LTE base band unit 132 establishes a link with the user equipment 150, it is possible for the core network 110 to transmit downlink data of the LTE data service to the GSM base band unit 131 in the step S211. In the step S212, the GSM base band unit 131 transmits the downlink data of the LTE data service to the LTE base band unit 132, and in the step S213, the LTE base band unit 132 transmits the downlink data of the LTE data service to the user equipment 150.

Those skilled in the art can appreciate that it is also possible that the user equipment 150 transmits uplink data of the LTE data service to the LTE base band unit 132 in the step S213, the LTE base band unit 132 transmits the uplink data of the LTE data service to the GSM base band unit 131 in the step S212, and the GSM base band unit 131 transmits the uplink data of the LTE data service to the core network 110 in the step S211.

With the solution of the invention, there is proposed a solution for a multi-standard wireless communication access network. A user equipment can enjoy different types of services concurrently without being handed over between access sub-networks adopting different wireless access technologies. Specifically, the user equipment can obtain the data of the LTE service without interrupting the initial link with the GSM base band unit 131. With the solution of the invention, a gap between the different wireless access technologies is removed, and the data transmission rate of the access network can be increased to the sum of data transmission rates under the different wireless access technologies. Thus the data rate of the user equipment will not be limited to the network data rate of the access sub-network to which the user equipment is linked.

Among the steps of the method described above with reference to Fig.2, the respective steps may not necessarily be performed in the order(s) as illustrated. For example, the GSM base band unit 131 can firstly determine whether the second service request needs to be processed by the LTE base band unit 132 according to the predetermined parameter and then transmit the second service request to the core network 110. Other arrangements to practice the invention can also be encompassed, and a detailed description thereof will be limited here.

There are various possible implementations of communication between the GSM base band unit 131 and the LTE base band unit 132. In an embodiment of the invention, a communication interface between the GSM base band unit 131 and the LTE base band unit 132 is defined similar to a X2 interface between eNodeBs in the LTE protocol. The GSM base band unit 131 adds a header corresponding to the above mentioned communication interface to a user-layer Protocol Data Unit which is then transmitted to the LTE base band unit 132 and vice versa. The GSM base band unit 131 adds a Media Access Control (MAC) header of the GSM protocol to a user-layer Protocol Data Unit, which is processed at the physical layer and then transmitted to the user equipment 150. The LTE base band unit 132 adds a MAC-layer header of the LTE protocol to a user-layer Protocol Data Unit, which is processed at the physical layer and then transmitted to the user equipment 150.

It is also possible to connect the respective access sub-networks adopting the different wireless access technologies together via the interface described above to form a unified access network. Processing operations internal to the access network is transparent to the user equipment and the core network.

With the solution of the invention, a simpler network architecture can be implemented. At the user side and the core network side, the access sub-networks adopting the various wireless access technologies can be regarded as a whole without distinguishing the different access sub-networks. For the operator, different wireless access technologies constitute a shared pool of resources, so that both the investment of operating assets and the investment of fixed assets can be reduced.

It is evident to those skilled in the art that the invention will not be limited to the exemplary embodiments described above but can be implemented in other specific forms without departing from the scope of the invention. Accordingly the embodiments shall be construed in any sense to be exemplary but not limiting. Furthermore apparently the term "comprise" will not preclude another element(s) or step(s), and the term "a" or "an" will not preclude plural. A plurality of elements stated in an apparatus claim can be embodied by a single element. The terms "first", "second", etc., are intended to designate a name but not to suggest any specific order.

## Claims

1. A method of accessing, in a first access sub-network of a wireless communication network, the method comprising the steps of: a. establishing an initial link with a user equipment (150); b. receiving first service downlink data from a core network (110) or first service uplink data from the user equipment (150); c. transmitting the first service downlink data to the user equipment (150) or transmitting the first service uplink data to the core network (110); **characterized by** d. receiving a second service request (S206) from the user equipment (150); e. forwarding the second service request (S206, S207) to the core network (110); determining whether the second service request needs to be processed by a second access sub-network according to a predetermined parameter; wherein the predetermined parameter comprises: quality of service requested by the second service request, a capability of accessing the second access sub-network of the user equipment (150); and if the second service request needs to be processed by the second access sub-network, transmitting a first notification message to the second access sub-network to instruct the second access sub-network to establish a link with the user equipment (150); f. receiving second service downlink data from the core network (110) or second service uplink data from the second access sub-network; and g. transmitting the second service downlink data to the second access sub-network or transmitting the second service uplink data to the core network (110); wherein the first access sub-network and the second access sub-network adopt different wireless communication access technologies.

2. The method according to claim 1, wherein before the step a, the method further comprises the steps of: - receiving a first service request from the user equipment (150); and - forwarding the first service request to the core network (110) .

3. The method according to claim 1, wherein before the step a, the method further comprises the step of: - receiving a called access request from the core network (110).

4. The method according to claim 3, wherein the predetermined parameter comprises: network capabilities of the first access sub-network and the second access sub-network and a current network load.

## Patentansprüche

1. Zugangsverfahren in einem ersten Zugangsteilnetzwerk eines drahtlosen Kommunikationsnetzwerks, das Verfahren die folgenden Schritte umfassend: a. Herstellen einer einleitenden Verknüpfung mit einer Benutzerausrüstung (159; b. Empfangen erster Dienstabwärtsstreckendaten von einem Kernnetzwerk (110) oder ersten Dienstaufwärtsstreckendaten von der Benutzerausrüstung (150); c. Übertragen der ersten Dienstabwärtsstreckendaten an die Benutzerausrüstung (150) oder Übertragen der ersten Dienstaufwärtsstreckendaten an das Kernnetzwerk (110); **gekennzeichnet durch** d. Empfangen einer zweiten Dienstanforderung (S206) von der Benutzerausrüstung (150); e. Weiterleiten der zweiten Dienstanforderung (S206, S207) an das Kernnetzwerk (110); Bestimmen, ob die zweite Dienstanforderung durch ein zweites Zugangsteilnetzwerk gemäß einem im Voraus bestimmten Parameter verarbeitet werden muss; wobei der im Voraus bestimmte Parameter umfasst: durch die zweite Dienstanforderung angeforderte Dienstgüte, eine Fähigkeit zum Zugang zum zweiten Zugangsteilnetzwerk der Benutzerausrüstung (150); und wenn die zweite Dienstanforderung durch das zweite Zugangsteilnetzwerk verarbeitet werden muss, Übertragen einer ersten Benachrichtigungsnachricht an das zweite Zugangsteilnetzwerk, um das zweite Zugangsteilnetzwerk anzuweisen, eine Verknüpfung mit der Benutzerausrüstung (150) herzustellen; f. Empfangen zweiter Dienstabwärtsstreckendaten von dem Kernnetzwerk (110) oder zweiter Dienstaufwärtsstreckendaten von dem zweiten Zugangsteilnetzwerk; und g. Übertragen der zweiten Dienstabwärtsstreckendaten an das zweite Zugangsteilnetzwerk oder Übertragen der zweiten Dienstaufwärtsstreckendaten an das Kernnetzwerk (110); wobei das erste Zugangsteilnetzwerk und das zweite Zugangsteilnetzwerk verschiedene Technologien für drahtlosen Kommunikationszugang anwenden.

2. Verfahren nach Anspruch 1, wobei das Verfahren vor dem Schritt a ferner die folgenden Schritte umfasst: - Empfangen einer ersten Dienstanforderung von der Benutzerausrüstung (150); und - Weiterleiten der ersten Dienstanforderung an das Kernnetzwerk (110).

3. Verfahren nach Anspruch 1, wobei das Verfahren vor dem Schritt a ferner den folgenden Schritt umfasst: - Empfangen einer gerufenen Zugangsanforderung von dem Kernnetzwerk (110).

4. Verfahren nach Anspruch 3, wobei der im Voraus bestimmte Parameter umfasst: Netzwerkfähigkeiten des ersten Zugangsteilnetzwerks und des zweiten Zugangsteilnetzwerks und eine gegenwärtige Netzwerklast.

## Revendications

1. Procédé d'accès, dans un premier sous-réseau d'accès d'un réseau de communication sans fil, le procédé comprenant les étapes suivantes : a. l'établissement d'une liaison initiale avec un équipement utilisateur (150) ; b. la réception de premières données de liaison descendante de service à partir d'un réseau central (110) ou de premières données de liaison montante de service à partir de l'équipement utilisateur (150) ; c. la transmission des premières données de liaison descendante de service à l'équipement utilisateur (150) ou la transmission des premières données de liaison montante de service au réseau central (110); **caractérisé par** d. la réception d'une seconde demande de service (S206) à partir de l'équipement utilisateur (150); e. la transmission de la seconde demande de service (S206, S207) au réseau central (110) ; la détermination du fait de savoir si la seconde demande de service doit être traitée par un second sous-réseau d'accès conformément à un paramètre prédéterminé; dans lequel le paramètre prédéterminé comprend : une qualité de service demandée par la seconde demande de service, une possibilité d'accéder au second sous-réseau d'accès de l'équipement d'utilisateur (150); et si la seconde demande de service doit être traitée par le second sous-réseau d'accès, la transmission d'un premier message de notification au second sous-réseau d'accès pour ordonner au second sous-réseau d'accès d'établir une liaison avec l'équipement utilisateur (150); f. la réception de secondes données de liaison descendante de service à partir du réseau central (110) ou de secondes données de liaison montante de service à partir du second sous-réseau d'accès; et g. la transmission des secondes données de liaison descendante de service au second sous-réseau d'accès ou la transmission des secondes données de liaison montante de service au réseau central (110) ; dans lequel le premier sous-réseau d'accès et le second sous-réseau d'accès adoptent différentes technologies d'accès de communication sans fil.

2. Procédé selon la revendication 1, dans lequel, avant l'étape a, le procédé comprend en outre les étapes de : - réception d'une première demande de service à partir de l'équipement utilisateur (150) ; et - transmission de la première demande de service au réseau central (110).

3. Procédé selon la revendication 1, dans lequel, avant l'étape a, le procédé comprend en outre l'étape de : - réception d'une demande d'accès d'appelé à partir du réseau central (110).

4. Procédé selon la revendication 3, dans lequel le paramètre prédéterminé comprend :
des capacités de réseau du premier sous-réseau d'accès et du second sous-réseau d'accès et une charge de réseau actuelle.
